Europäisches Patentamt

European Patent Office

Office européen des brevets

(11) Publication number: **0 420 273 A2**

(12) **EUROPEAN PATENT APPLICATION**

(21) Application number: **90118691.6**

(22) Date of filing: **28.09.90**

(51) Int. Cl.5: **C08G 18/10, C08G 18/00, C08G 18/66, C08G 18/76**

(30) Priority: **29.09.89 US 415008**

(43) Date of publication of application:
**03.04.91 Bulletin 91/14**

(84) Designated Contracting States:
**AT BE CH DE DK ES FR GB GR IT LI LU NL SE**

(71) Applicant: **THE DOW CHEMICAL COMPANY**
**2030 Dow Center Abbott Road**
**Midland, MI 48640(US)**

(72) Inventor: **Weaver, Laura B.**
**55 South Trillium Court**
**Lake Jackson, Texas 77566(US)**

(74) Representative: **Huber, Bernhard, Dipl.-Chem.**
**et al**
**Möhlstrasse 22 Postfach 860 820**
**W-8000 München 86(DE)**

(54) Flexible polyurethane foams and process for preparing the same.

(57) A soft, moldable, flexible polyurethane foam prepared by reacting a prepolymer comprising the reaction product of from 25 to 75 percent by weight of a first polyol, this polyol being a polyether polyol having an equivalent weight of greater than 1000 and a nominal functionality of 1.6 to 3, and from 25 to 75 percent of diphenylmethanediisocyanate or a derivative thereof, such that there is a stoichiometric excess of the diphenylmethanediisocyanate or derivative thereof; and a second polyol. The method of preparing this foam is also described. The foam preferably exhibits a Shore A hardness of less than about 30 and a compression set at room temperature of less than about 10 percent at 50 percent compression, allowing for application in, for example, gaskets (both molded and foam-in-place type), joint compounds, shock-absorbing insert articles, carpet underlay materials and some flotation devices.

EP 0 420 273 A2

## FLEXIBLE POLYURETHANE FOAMS AND PROCESS FOR PREPARING THE SAME

This invention relates to flexible polyurethane foams prepared using high equivalent weight isocyanate prepolymers.

Flexible polyurethane foams are used in a wide variety of applications, such as bedding, furniture cushioning, automobile seating, headrests, dashboards, packaging and toys. These foams are generally prepared by reacting a nominally trifunctional, high equivalent weight polyol with a polyisocyanate, in the presence of a blowing agent and sometimes also in the presence of a minor amount of a crosslinker.

These foams are commonly separated into two types, according to their method of manufacture. Molded foams are prepared by reacting the polyurethane-forming components in a closed mold to produce foams having a predetermined shape. In contrast, slabstock foams are prepared by permitting the foam components to freely rise against their own weight.

Because of the differences in these two processes, there are differences in the preferred isocyanate component. While toluene diisocyanate ("TDI") is generally used in preparing slabstock foams, diphenylmethanediisocyanate ("MDI") is more often used for molded foams. In particular, MDI is preferred for certain specialty applications in which a "two-shot" process is employed. In this type of process the solid MDI or modified (liquid) MDI is pre-reacted with a polyol to form a prepolymer. The resulting prepolymer is stable as a liquid at room temperature. Such MDI prepolymers have been shown to enable improved elastomeric properties. The prepolymer can then be reacted in a subsequent step with a polyol and/or a blowing agent such as water and, optionally, with a crosslinker, to form the polyurethane foam. Following addition of blowing agents and other desired additives the foams formed by the two-shot process are generally classified as rigid or semi-rigid, that is, they generally have a Shore A hardness ranging from 40 to 85.

Softer molded polyurethane foams, that is, those having a Shore A hardness of less than about 30, can also be prepared, but often use MDI or MDI derivatives, such as polymeric MDI ("PMDI"), which have either not been formed into a prepolymer or have been formed into a low equivalent weight prepolymer. These foams have been prepared with polyols having an equivalent weight of greater than about 1500 and a nominal functionality of from 2.0 to 3.0. The polyols may be polyether polyols, copolymer polyols, or mixtures thereof. A blowing agent is also incorporated into these formulations. In general the high equivalent weight of the polyol results in a relatively low number of hydroxyl equivalents that can react with most commercial MDI's. At the preferred reaction stoichiometry of 0.95 to 1.05 (active isocyanate groups to active hydrogen-containing groups), the production mix ratio using these commercial MDI's and PMDI's often falls below 0.4, for example, 40 parts commercial MDI to 100 parts polyol formulation.

However, a problem is encountered in using MDI to make these softer foams. It is generally accepted that ideal mixing occurs when the MDI and polyol components are of similar viscosity and weight. However, since a direct correlation in viscosity and weight is unlikely, it is general practice in the industry to use a production mix ratio of from 0.4 to 0.8, that is, 40 to 80 parts commercial MDI to 100 parts polyol. Because it is also common practice for polyurethane molders to use isocyanate and polyol delivery pumps of closely equivalent capacity, in order to achieve a stoichiometric mix ratio it is necessary to prepare these soft elastomers by processing on the low boundary of the isocyanate pump and on the high boundary of the polyol pump. This is undesirable because rapid pump wear results. To circumvent this problem smaller pump lines are in some cases used to reduce isocyanate throughput, or conversely, larger pump lines are used to increase polyol throughput. In any event, it is difficult to prepare molded foams having Shore A hardnesses of significantly less than 30, for example, less than 10, by mixing commercial MDI, polyol and other formulation components directly together.

Thus, it would be desirable in the art to be able to easily prepare a soft elastomeric polyurethane foam that is capable of being molded and which preferably exhibits a Shore A hardness of less than about 30, more preferably less than about 20, and most preferably less than about 10. Such a method would preferably reduce or eliminate pump wear problems associated with direct mixing of MDI and polyol in a one-shot process, and would preferably employ MDI in a relatively liquid-stable form.

Accordingly, the present invention provides a soft, moldable, flexible polyurethane foam prepared by reacting: (1) a prepolymer, which is the reaction product of from 25 to 75 percent by weight of a first polyol, this first polyol being a polyether polyol having an equivalent weight of greater than about 1000 and a nominal functionality of from 1.6 to 3, and from 25 to 75 percent by weight of diphenylmethane-diisocyanate or a derivative thereof, such that there is a stoichiometric excess of the diphenylmethane-diisocyanate or derivative thereof; and (2) a second polyol having an equivalent weight of greater than 1500.

The present invention further provides a process for preparing this foam, comprising reacting the described prepolymer with the second polyol.

The foam of the present invention preferably exhibits a Shore A hardness of less than about 30, and more preferably less than about 10, and highly desirable and unexpected compression set measurements at room temperature and at 70°C which are less than about 10 percent, and more preferably less than about 5 percent. The density is preferably from 10 to 30 pounds per cubic foot, more preferably from 10 to 20 pounds per cubic foot. Because of their superior recovery upon compression, such foams show potential application particularly in, for example, gaskets (both molded and foam-in-place type), joint compounds, shock-absorbing insert articles, carpet underlay materials, and some flotation devices. Selection of the particular components of the present invention in the quantities prescribed by the present invention also eliminates the need to use widely disparate amounts of polyisocyanate and polyol in order to make a soft, MDI-based foam, and therefore excessive pump wear is not encountered.

In the process of the present invention a prepolymer is first prepared using a high equivalent weight polyether polyol and MDI and/or a derivative of MDI such as modified MDI. As used herein, "high equivalent weight" is defined as meaning an equivalent weight of greater than 1000, preferably greater than 1500, and more preferably greater than 1800. The polyols are preferably triols, and also preferably are glycerine-initiated polyols which have been reacted with propylene oxide and ethylene oxide-capped. Other preferred types of polyols are glycerine-initiated polyols which have been reacted with both propylene oxide and ethylene oxide, and then ethylene oxide-capped. The polyol selected preferably has a nominal functionality of from 1.6 to 3, and in the case of triols, from 2.47 to 3. Diols can also be selected, and generally have a nominal functionality of from 1.6 to 2. With respect to polyols, crosslinkers and chain extenders, the term "functionality" refers to the number of active hydrogen-containing groups per molecule of the component described. "Nominal functionality" means the actual functionality. Thus, it is to be understood that, while triol theoretical functionality is 3 and diol theoretical functionality is 2, commercially available triols and diols are not usually expected to exhibit nominal functionalities as high as their theoretical functionalities.

The second component of the prepolymer used to prepare the foam of the present invention is diphenylmethanediisocyanate (MDI) or a derivative thereof such as modified (liquid) MDI. The term "modified MDI" includes polyisocyanates having carbodiimide, biuret and/or uretonimine groups which are based on MDI. It also includes polymeric MDI (PMDI). The MDI or derivative thereof used herein preferably has an equivalent weight from 125 to 160. The 2,4'- isomer, the 4,4'- isomer, or mixtures thereof can be used. However, the 4,4'-isomer alone or as the predominant member of a mixture of the isomers is preferred. Also preferred is a derivative prepared by reacting MDI to form a carbodiimide, and then reacting that material to form a trifunctional cycloadduct. The mixture of MDI, the carbodiimide and the cycloadduct are then in equilibrium. This mixture contains a major amount of pure MDI and minor amounts of carbodiimides and trifunctional adducts. Dimers and trimers, as well as other adducts, based on MDI are also included as derivatives. If PMDI is selected, the polyol component is preferably a diol. The MDI or derivative thereof chosen preferably has a nominal functionality of from 2.0 to 3.0, more preferably from 2.0 to 2.7, and most preferably from 2.0 to 2.3. Particularly preferred polyisocyanates are pure or liquid MDI in which the 4,4'-isomer comprises at least about 90, preferably at least about 96, and more preferably at least about 97, weight percent of the mixture.

The polyol and MDI or MDI derivative, such as modified MDI, of the present invention are combined to form a prepolymer using methods and processes known to and conventionally used by those skilled in the art. A key feature of the invention is the proportion of polyol to isocyanate. The prepolymer preferably is prepared from 25 to 75 percent by weight of the polyol and from 25 to 75 percent by weight of the isocyanate. More preferably the prepolymer is prepared from 30 to 65 percent by weight of the polyol and from 35 to 70 percent by weight of the isocyanate, and most preferably the prepolymer is prepared from 55 to 65 percent by weight of the polyol and from 35 to 45 percent by weight of the isocyanate. There must be at least a slight stoichiometric excess of the diphenylmethanediisocyanate or its derivative as defined in order to form the prepolymer.

In one embodiment of the present invention a "quasi-prepolymer" can be prepared. As is known to those skilled in the art, in this instance a polyol is reacted with a substantial excess of MDI or a derivative of MDI to form the quasi-prepolymer, generally at least 3 times more polyisocyanate than polyol; then this quasi-prepolymer is reacted with more polyol and other components to form the foam. This two-stage reaction is more controllable, the components are more compatible, and the heat of reaction is spread over the two stages, thereby considerably lowering the risk of scorch. The total isocyanate to polyol mix ratio of the final foam is still preferably in the 0.4 to 0.8 range.

Following preparation, the prepolymer is then used to prepare a flexible polyurethane foam. Methods and materials for completing the foam are those generally known to those skilled in the art. One or more blowing agents are required in order to produce the foam. The blowing agent is defined herein as any

3

material which is capable of generating a gas under the conditions of the reaction of the prepolymer to form a foam. For this purpose water, carbon dioxide, nitrogen, air, low-boiling halogenated methanes such as trichlorofluoromethane, finely divided solids, so-called "azo" blowing agents, such as azobis(formamide) and other agents known to those skilled in the art can be used. Of these water and trichlorofluoromethane are preferred. If water is selected as the sole blowing agent it is preferably added in an amount of up to about 2 percent by weight, more preferably from 0.2 to 0.85 percent by weight. If trichlorofluoromethane is selected it is preferably added in an amount up to about 15 percent by weight. Generally, the selection and use of a blowing agent to produce a polyurethane foam of a desired density are well known in the art.

A number of other additives and modifiers can be incorporated into a polyurethane foam formulation of the present invention in order to modify the final product. For example, surfactants can be used to produce a foam having a desirable appearance by preventing collapse. Surfactants also help to prevent the formation of undesirable quantities of large pores by stabilizing the foaming reaction mixture until the mixture is sufficiently cured to maintain its shape. Surfactants known to be effective in MDI-based polyurethane foams can be successfully employed, for example, silicone/poly(alkylene oxide) copolymers such as are described in, for example, U.S. Patent Nos. 3,887,500 and 3,957,842. Other silicone-based surfactants may also be effective. Other additives/reactants which also alter appearance or performance, such as colorants, ultraviolet light stabilizers, flame retardants, antioxidants, mold release agents and cell openers can also be incorporated in the final formulation, preferably in amounts which improve or do not unacceptably impair the desirable characteristics of the final product.

Crosslinking, or "chain-extending", agents can also be used. Those having 2 to 6, preferably 2 to 4, and more preferably about 3, active hydrogen equivalents per mole are desirably used. Typical extenders to promote cross-linking herein include, for example, trimethylolpropane, trimethylolethane, glycerol, glycerine, triethanolamine, ethoxylated trimethylolpropane, adducts of 4 to 8 moles of ethylene oxide and/or propylene oxide and ethylenediamine, polyamines such as methylene bis(o-chloroaniline) and ethylenediamine, ammonia, diethanolamine, dipropylene glycol, tripropylene glycol, 1,4-butanediol and ethylene glycol. Preferred are trimethylolpropane and ethoxylated trimethylolpropane, and more preferred is ethoxylated trimethylolpropane. The crosslinking agent or agents are preferably incorporated in the formulation in an amount not exceeding 15 percent by weight of the polyol formulation (containing, for example, polyol, crosslinker, blowing agent, catalysts and surfactants), and more preferably from 0.2 to 6.0 percent by weight.

A catalyst can also be employed in the process of the present invention. The catalyst is preferably incorporated in the formulation in an amount suitable to increase the rate of reaction between the isocyanate prepolymer and the hydroxyl-reacting species. Although a wide variety of materials is known to be useful for this purpose, the most widely used and preferred catalysts are the tertiary amine catalysts and the organotin catalysts.

Examples of the tertiary amine catalysts include, for example, triethylenediamine, N-methyl morpholine, N-ethyl morpholine, diethyl ethanolamine, N-coco morpholine, 1-methyl-4-dimethylaminoethyl piperazine, 3-methoxy-N-dimethylpropylamine, N,N-diethyl-3-diethyl aminopropylamine and dimethylbenzyl amine. Tertiary amine catalysts are advantageously employed in an amount from 0.01 to 2 percent by weight of the polyol formulation.

Examples of organotin catalysts include dimethyltindilaurate, dibutyltindilaurate, dioctyltin dilaurate and stannous octoate. Other examples of effective catalysts include those taught in, for example, U.S. Patent No. 2,846,408. Preferably the organotin catalyst is employed in an amount from 0.001 to 0.5 percent by weight of the the polyol formulation.

In making molded polyurethane foam it is most preferred to use one or more tertiary amine catalysts, or a combintion comprising an organotin catalyst and one or more tertiary amine catalysts, in order to optimize sequencing of the blowing and curing reactions. As is well-known in the art, careful selection of catalysts and surfactants is usually necessary to produce a desirably high quality foam.

In preparing molded polyurethane foams, all components in the polyol formulation, that is, blowing agent and any modifying components, for example, surfactants, colorants and catalysts, are advantageously first blended together and injected as a single stream into a mixing head, and then mixed with the second stream consisting of the isocyanate-containing prepolymer. In performing the mixing and mold-filling step conventional, low-pressure apparatus can be used or, alternatively, high-pressure impingement mixing processes, such as reaction injection molding methods, can be used. Generally the components can be blended while at approximately room temperature, although the prepolymers described herein can alternatively be heated if desired to lower their effective viscosity.

Methods generally known to those skilled in the art can be effectively employed to mold the formulations of the present invention. Preferably, an amount of the reaction mixture is injected into the mold such that, after expansion, the mixture completely fills the mold. Advantageously, a small excess of material is injected, greater than that amount which is minimally required to fill the mold. After filling the mold, the reaction mixture is preferably permitted to cure in the mold at least to a state which permits the molded foam to be removed from the mold without undesirable permanent distortion. In typical commercial procedures, an in-mold cure time of from 2 to 30 minutes is adequate for this purpose.

Various unexpected advantages are seen in the foam prepared according to this invention. The foam of this invention advantageously has a density of from 10 to 30, preferably from 10 to 20, pounds per cubic foot. Shore A hardness is preferably less than about 30, more preferably less than about 20, and most preferably less than about 10. Compression set at 70°C and at room temperature, at a given hardness, is preferably less than about 10 percent, and more preferably less than about 5 percent.

Because of the unexpected properties of the foam of the present invention, including its ability to form a "skin" in the mold, it is particularly useful for producing, for example, padding, carpet underlay, automobile head rests, crash pads, door handles, cushioning inserts, gaskets, furniture armrests and toys.

The following examples are given to more fully illustrate the present invention. These examples are not intended to be, nor should they be construed as being, indicative of the scope of the invention. All parts and percentages are by weight unless otherwise indicated.

Example 1

A foam sample was prepared from a formulation as described in Table 1A. The nominal functionalities of Polyol A and Polyol B are 2 and 3, respectively.

TABLE 1A

| Component | Parts by Weight |
|---|---|
| Polyol A[1] | 25 |
| Polyol B[2] | 50 |
| Crosslinker[3] | 9 |
| Amine Catalyst[4] | 0.7 |
| Tin Catalyst[5] | 0.15 |
| Surfactant[6] | 1.0 |
| Water | 0.4 |
| Trichlorofluoromethane | 9.0 |
| Prepolymer A[7] | 61.25 |

[1]Polyol A is a 2,000 equivalent weight diol containing about 18.5 percent by weight ethylene oxide end-capping.

[2]Polyol B is a 2,100 equivalent weight styrene/acrylonitrile grafted copolymer polyol containing about 25 percent by weight styrene/acrylonitrile solids.

[3]Crosslinker is a 91 equivalent weight polyether polyol having triol functionality.

[4]Amine Catalyst is a 33 percent by weight triethylene diamine catalyst in dipropylene glycol.

[5]Tin Catalyst is dioctyltin dilaurate.

[6]Surfactant is a silicone surfactant.

[7]Prepolymer A is a 330 equivalent weight isocyanate product prepared by reacting 40 percent diphenylmethanediisocyanate and 60 percent of a nominally trifunctional 2000 equivalent weight poly(propylene oxide) containing about 14 percent by weight ethylene oxide end-capping.

In making the foam, Prepolymer A was first thoroughly mixed with the other components of the formulation. The mixture was poured into a steel mold having a temperature of 110° F. The parts were released at 6 minutes from the commencement of the pour. The -NCO/-OH mix ratio was 0.64 at an isocyanate index of 1.0. No postcure of plaques was necessary. After 48 hours rest at room temperature, the physical properties were measured. They were found to be as shown in Table 1B:

TABLE 1B

| Property | Value |
|---|---|
| Shore A hardness | 25 |
| Compression set (compressed 50 percent for 22 hours) at 70°C | 4.9 |
| Compression set (compressed 50 percent for 22 hours) at room temperature | 2.3 |
| Density, pounds per cubic foot (pcf) | 25-30 |

Example 2

6

A foam sample was prepared from a formulation as described in Table 2A. The nominal functionalities of Polyol A and Polyol B are as shown in the previous example.

TABLE 2A

| Component | Parts by Weight |
|---|---|
| Polyol A[1] | 25 |
| Polyol B[2] | 50 |
| Crosslinker[3] | 4 |
| Amine Catalyst[4] | 0.7 |
| Tin Catalyst[5] | 0.15 |
| Surfactant[6] | 1.0 |
| Water | 0.4 |
| Trichlorofluoromethane | 9.0 |
| Prepolymer A[7] | 41.3 |

[1] Polyol A is a 2,000 equivalent weight diol containing about 18.5 percent by weight ethylene oxide end-capping.

[2] Polyol B is a 2,100 equivalent weight styrene/acrylonitrile grafted copolymer polyol containing about 25 percent by weight styrene/acrylonitrile solids.

[3] Crosslinker is a 91 equivalent weight polyether polyol having triol functionality.

[4] Amine Catalyst is a 33 percent by weight triethylene diamine catalyst in dipropylene glycol.

[5] Tin Catalyst is dioctyltin dilaurate.

[6] Surfactant is a silicone surfactant.

[7] Prepolymer A is a 330 equivalent weight isocyanate product prepared by reacting 40 percent diphenylmethanediisocyanate and 60 percent of a nominally trifunctional 2000 equivalent weight poly(propylene oxide) containing about 14 percent by weight ethylene oxide end-capping.

In making the foam, the same procedure was used as in Example 1. Mold temperature and time were the same as in that example. The -NCO/-OH mix ratio was 0.46 at an isocyanate index of 1.0. No postcure of plaques was necessary. After 48 hours rest at room temperature, the physical properties were measured. They were found to be as shown in Table 2B:

TABLE 2B

| Property | Value |
|---|---|
| Shore A hardness | 9 |
| Compression set (compressed 50 percent for 22 hours) at 70°C | 2.8 |
| Density, pounds per cubic foot (pcf) | 20-25 |

Example 3

A foam sample was prepared from a formulation as described in Table 3A. Nominal functionalities of Polyol A and Polyol B are as shown in Example 1. No trichlorofluoroethane was used.

TABLE 3A

| Component | Parts by Weight |
|---|---|
| Polyol A[1] | 35 |
| Polyol B[2] | 40 |
| Crosslinker[3] | 4 |
| Amine Catalyst[4] | 0.7 |
| Tin Catalyst[5] | 0.1 |
| Surfactant[6] | 1.5 |
| Water | 0.9 |
| Prepolymer A[7] | 60.5 |

[1] Polyol A is a 2,000 equivalent weight diol containing about 18.5 percent by weight ethylene oxide end-capping.
[2] Polyol B is a 2,100 equivalent weight styrene/acrylonitrile grafted copolymer polyol containing about 25 percent by weight styrene/acrylonitrile solids.
[3] Crosslinker is a 91 equivalent weight polyether polyol having triol functionality.
[4] Amine Catalyst is a 33 percent by weight triethylene diamine catalyst in dipropylene glycol.
[5] Tin Catalyst is dioctyltin dilaurate.
[6] Surfactant is a silicone surfactant.
[7] Prepolymer A is a 330 equivalent weight isocyanate product prepared by reacting 40 percent diphenylmethanediisocyanate and 60 percent of a nominally trifunctional 2000 equivalent weight poly(propylene oxide) containing about 14 percent by weight ethylene oxide end-capping.

The foam was prepared using methods and means known to those skilled in the art and as described in previous examples. The -NCO/-OH mix ratio was 0.74 at an isocyanate index of 1.0. No postcure of plaques was necessary. After 48 hours rest at room temperature, the physical properties were measured. They were found to be as shown in Table 3B:

TABLE 3B

| Property | Value |
|---|---|
| Shore A hardness | 12 |
| Compression set (compressed 50 percent for 22 hours) at 70°C | 3.0 |
| Compression set (compressed 50 percent for 22 hours) at room temperature | 1.0 |

Example 4

A foam sample was prepared from a formulation as described in Table 4A. The nominal functionalities of Polyol A and Polyol B are as shown in previous examples.

TABLE 4A

| Component | Parts by Weight |
|---|---|
| Polyol A[1] | 25 |
| Polyol C[2] | 50 |
| Crosslinker[3] | 9 |
| Amine Catalyst[4] | 0.7 |
| Tin Catalyst[5] | 0.15 |
| Surfactant[6] | 1.0 |
| Water | 0.4 |
| Trichlorofluoromethane | 9.0 |
| Prepolymer A[7] | 63.3 |

[1]Polyol A is a 2,000 equivalent weight diol containing about 18.5 percent by weight ethylene oxide end-capping.
[2]Polyol C is a 1,650 equivalent weight poly(propylene oxide) containing about 20 percent by weight ethylene oxide end-capping.
[3]Crosslinker is a 91 equivalent weight polyether polyol having triol functionality.
[4]Amine Catalyst is a 33 percent by weight triethylene diamine catalyst in dipropylene glycol.
[5]Tin Catalyst is dioctyltin dilaurate.
[6]Surfactant is a silicone surfactant.
[7]Prepolymer A is a 330 equivalent weight isocyanate product prepared by reacting 40 percent diphenylmethanediisocyanate and 60 percent of a nominally trifunctional 2000 equivalent weight poly(propylene oxide) containing about 14 percent by weight ethylene oxide end-capping.

The mixing procedure of Example 1 was used. The mixture was poured into a steel mold having a temperature of 110° F. The parts were released at 4 minutes from the commencement of the pour. The -NCO/-OH mix ratio was 0.66 at an isocyanate index of 1.0. No postcure of plaques was necessary. After 48 hours rest at room temperature, the physical properties were measured. They were found to be as shown in Table 4B:

TABLE 4B

| Property | Value |
|---|---|
| Shore A hardness | 18 |
| Compression set (compressed 50 percent for 22 hours) at 70°C | 6.9 |
| Compression set (compressed 50 percent for 22 hours) at room temperature | 1.9 |

EP 0 420 273 A2

## Example 5

A foam sample was prepared from a formulation as described in Table 5A. The nominal functionalities of Polyol A and Polyol B are as shown in previous examples. No crosslinking agent was used.

TABLE 5A

| Component | Parts by Weight |
|---|---|
| Polyol A[1] | 25 |
| Polyol B[2] | 75 |
| Amine Catalyst[3] | 0.8 |
| Tin Catalyst[4] | 0.03 |
| Surfactant[5] | 1.5 |
| Water | 0.75 |
| Prepolymer B[6] | 34.01 |

[1]Polyol A is a 2,000 equivalent weight diol containing about 18.5 percent by weight ethylene oxide end-capping.
[2]Polyol B is a 2,100 equivalent weight styrene/acrylonitrile grafted copolymer polycl containing about 25 percent by weight styrene/acrylonitrile solids.
[3]Crosslinker is a 91 equivalent weight polyether polyol having triol functionality.
[4]Tin Catalyst is an organotin catalyst.
[5]Tin Catalyst is dioctyltin dilaurate.
[6]Prepolymer B is a 258 equivalent weight isocyanate product prepared by reacting 40 percent of a nominally trifunctional 1500 equivalent weight poly(propylene oxide) containing about 18.5 percent ethylene oxide-capping, and 60 percent modified diphenylmethanediisocyanate.

Procedures were those known to those skilled in the art and as described in previous examples. The NCO/0H mix ratio was 0.33 at an isocyanate index of 1.0 The -NCO/-OH mix ratio was 0.33 at an isocyanate index of 1.0. After 48 hours rest at room temperature, the physical properties were measured. They were found to be as shown in Table 5B:

TABLE 5B

| Property | Value |
|---|---|
| Shore A hardness | 5 |
| Compression set (compressed 50 percent for 22 hours) at 70°C | 7.4 |
| Compression set (compressed 50 percent for 22 hours) at room temperature | 1.8 |

## Example 6

A foam sample was prepared from a formulation as described in Table 6A. The nominal functionalities of Polyol A and Polyol B are as shown in previous examples.

10

EP 0 420 273 A2

TABLE 6A

| Component | Parts by Weight |
|---|---|
| Polyol A[1] | 25 |
| Polyol B[2] | 50 |
| Crosslinker[3] | 4 |
| Amine Catalyst[4] | 0.6 |
| Tin Catalyst[5] | 0.16 |
| Surfactant[6] | 1.99 |
| Water | 0.75 |
| Trichlorofluoromethane | 4 |
| Prepolymer A[7] | 42.3 |

[1]Polyol A is a 2,000 equivalent weight diol containing about 18.5 percent by weight ethylene oxide end-capping.
[2]Polyol B is a 2,100 equivalent weight styrene/acrylonitrile grafted copolymer polyol containing about 25 percent by weight styrene/acrylonitrile solids.
[3]Crosslinker is a 91 equivalent weight polyether polyol having triol functionality.
[4]Amine Catalyst is a 33 percent by weight triethylene diamine catalyst in dipropylene glycol.
[5]Tin Catalyst is dioctyltin dilaurate.
[6]Surfactant is a silicone surfactant.
[7]Prepolymer A is a 330 equivalent weight isocyanate product prepared by reacting 40 percent diphenylmethanediisocyanate and 60 percent of a nominally trifunctional 2000 equivalent weight poly(propylene oxide) containing about 14 percent by weight ethylene oxide end-capping.

Procedures are as described in earlier examples. The -NCO/-OH mix ratio was 0.49 at an isocyanate index of 1.0. After 48 hours rest at room temperature, the physical properties were measured. They were found to be as shown in Table 6B:

TABLE 6B

| Property | Value |
|---|---|
| Shore A hardness | 15 |
| Compression set (compressed 50 percent for 22 hours) at 70°C | 6.7 |
| Compression set (compressed 50 percent for 22 hours) at room temperature | 0.9 |
| Density, pounds per cubic foot (pcf) | 18-25 |

Comparative Example 7

The following is a comparative example, showing an elastomeric foam prepared using similar compo-

11

nents as in previous examples but without preparation of a prepolymer. It is not an example of the present invention.

A foam sample was prepared from a formulation as described in Table 7A. The nominal functionalities of Polyol A and Polyol B are as shown in previous examples.

TABLE 7A

| Component | Parts by Weight |
|---|---|
| Polyol A[1] | 25 |
| Polyol B[2] | 50 |
| Crosslinker[3] | 4 |
| Amine Catalyst[4] | 0.7 |
| Tin Catalyst[5] | 0.1 |
| Surfactant[6] | 1.5 |
| Water | 0.4 |
| Trichlorofluoromethane | 9.0 |
| Liquid MDI[7] | 18.08 |

[1]Polyol A is a 2,000 equivalent weight diol containing about 18.5 percent by weight ethylene oxide end-capping.
[2]Polyol B is a 2,100 equivalent weight styrene/acrylonitrile grafted copolymer polyol containing about 25 percent by weight styrene/acrylonitrile solids.
[3]Crosslinker is a 91 equivalent weight polyether polyol having triol functionality.
[4]Amine Catalyst is a 33 percent by weight triethylene diamine catalyst in dipropylene glycol.
[5]Tin Catalyst is dioctyltin dilaurate.
[6]Surfactant is a silicone surfactant.
[7]Liquid MDI is a carbodiimide-modified MDI having an equivalent weight of 143.

In making the foam, all components except the MDI were thoroughly blended using methods known to those skilled in the art. The MDI was then stirred in at room temperature, and the mixture was poured into a steel mold having a temperature of 110° F. The parts were released at 4 minutes from the commencement of the pour. The -NCO/-OH mix ratio was 0.20 at an isocyanate index of 1.0. No postcure of plaques was necessary. After 48 hours rest at room temperature, the physical properties were measured. They were found to be as shown in Table 7B:

Table 7B

| Property | Value |
|---|---|
| Shore A hardness | 27 |
| Compression set (compressed 50 percent for 22 hours) at 70°C | 12.6 |
| Compression set (compressed 50 percent for 22 hours) at room temperature | 3.5 |

**Claims**

1. A flexible polyurethane foam prepared by reacting:
(1) a prepolymer, comprising the reaction product of from 25 to 75 percent by weight of a first polyol, said polyol being a polyether polyol having an equivalent weight of greater than 1000 and a nominal functionality of from 1.6 to 3, and from 25 to 75 percent of diphenylmethanediisocyanate or a derivative thereof, such that there is a stoichiometric excess of the diphenylmethanediisocyanate or derivative thereof; and
(2) a second polyol having an equivalent weight of greater than 1500.

2. The foam of Claim 1 wherein the first polyol has an equivalent weight of greater than 1500.

3. The foam of Claim 1 wherein from 30 to 65 percent by weight of the prepolymer is the polyether polyol.

4. The foam of Claim 1 further comprising a blowing agent selected from carbon dioxide, nitrogen, water, air, low-boiling halogenated methanes, azobis(formamide) and mixtures thereof.

5. The foam of Claim 1 wherein the first polyol has an equivalent of greater than 1500 and a nominal functionality of from 2.47 to 3.

6. The foam of Claim 1 wherein the Shore A hardness is less than 30.

7. The foam of Claim 1 wherein the compression set at room temperature is less than 10 percent at 50 percent compression.

8. A process for preparing a flexible polyurethane foam comprising reacting:
(1) a prepolymer, which is the reaction product of from 25 to 75 percent by weight of a first polyol, said first polyol being a polyether polyol having an equivalent weight of greater than 1000 and a nominal functionality of from 1.6 to 3, and from 25 to 75 percent of diphenylmethanediisocyanate or a derivative thereof, such that there is a stoichiometric excess of the diphenylmethanediisocyanate or derivative thereof; and
(2) a second polyol having an equivalent weight of greater than 1500.

9. The process of Claim 8 wherein the foam has a Shore A hardness of less than 30 and a compression set at room temperature of less than 10 percent at 50 percent compression.

10. The process of Claim 8 wherein the first polyol has an equivalent weight of greater than 1500 and a nominal functionality of from 2.47 to 3.